# EUROPEAN PATENT SPECIFICATION

(11) **EP 4 226 706 B1**
(45) Date of publication and mention of the grant of the patent: **10.09.2025**
(21) Application number: 20789736.4
(22) Date of filing: 07.10.2020
(51) Int. Cl.: H04W 72/0446, H04W 56/00, H04W 52/02, H04W 88/08

(54) **TIME SYNCHRONIZATION AND COORDINATION BETWEEN A RADIO UNIT AND BASEBAND UNITS**
ZEITSYNCHRONISATION UND KOORDINATION ZWISCHEN EINER FUNKEINHEIT UND BASISBANDEINHEITEN
SYNCHRONISATION ET COORDINATION TEMPORELLES ENTRE UNE UNITÉ RADIO ET DES UNITÉS DE BANDE DE BASE

(43) Date of publication of application: 16.08.2023
(73) Proprietor: Telefonaktiebolaget LM Ericsson (publ), 164 83 Stockholm (SE)
(72) Inventor: GÖRANSSON, Bo, 191 38 SOLLENTUNA (SE); FRENGER, Pål, 582 27 LINKÖPING (SE); ARONSSON, Anders, 451 96 Uddevalla (SE); BENGTSSON, Jonas, 261 72 HÄLJARP (SE)
(74) Representative: Ericsson
(86) International application number: PCT/SE2020/050957
(87) International publication number: WO 2022/075896

(56) References cited:
- EP-A1- 3 094 155
- US-A1- 2020 204 252

## Description

### TECHNICAL FIELD

Embodiments presented herein relate to methods, a network node, a baseband unit, computer programs, and a computer program product for enabling time synchronized and coordinated downlink transmission of data from a radio unit.

### BACKGROUND

In communications networks, there may be a challenge to obtain good performance and capacity for a given communications protocol, its parameters and the physical environment in which the communications network is deployed.

For example, all communication networks consume energy. Increasing the size of the communication networks as well as increasing the number of devices served by the communications networks might thus cause an increase in energy consumption. Mechanisms and techniques aiming towards reducing the energy consumption in communication networks have therefore been devised.

Two non-limiting examples of mechanisms or techniques that can be deployed to reduce energy consumption in (radio) access network nodes in the communication network are micro-sleep transmission (MSTx) and Low Energy Scheduling Solution (LESS). In this respect, according to MSTx, the radio power amplifiers are automatically switched off on a symbol-time basis when no signaling or user data needs to be transmitted on the downlink. MSTx enables discontinuous transmission on the downlink to save energy during low traffic. With LESS downlink transmissions for non-critical data are rescheduled. Packets of time-sensitive services, such as voice services, are excluded, ensuring that the quality of service is never compromised. LESS can be used in combination with MSTx to improve the energy efficiency as in LESS even more timeslots are emptied and can trigger micro sleep.

However, there are scenarios where the resulting energy savings of using LESS and MSTx are compromised. Some examples of such scenarios are open radio access network RAN (ORAN) configuration where different baseband units, possibly belonging to different operators, are connected to the same radio unit. One reason for this is that many radio units support variants of multi-band, multi-carrier, and multi-RAT (where RAT is short for radio access technology) operation and therefore need to be configured in a very flexible manner.

Prior art examples are: US 2020/204252 A1 (BARBIERI ALAN [US] ET AL) 25 June 2020 (2020-06-25); EP 3 094 155 A1 (AIRVANA LP [US]) 16 November 2016 (2016-11-16).

Hence, there is still a need for mechanisms and techniques that enable efficient energy savings in communication networks in general, and especially in such communication networks where different baseband units, possibly belonging to different operators, are connected to the same radio unit, without compromising the performance of the baseband units and the radio unit in terms of multi-band, multi-carrier, and multi-RAT operation.

### SUMMARY

An object of embodiments herein is to provide efficient energy savings in communication networks in general, and especially in such communication networks where different baseband units, possibly belonging to different operators, are connected to the same radio unit.

The scope of the present invention is defined in the appended independent claims 1, 11, 12, 13, 14 and 15. Specific embodiments of the present invention are defined in the dependent claims.

According to claim 1 there is presented a method for enabling time synchronized and coordinated downlink transmission of data from a radio unit. The method is performed by a network node. The method comprises configuring at least two baseband units. The at least two baseband units are operatively connected to the radio unit for downlink transmission of data. The at least two baseband units are configured with time synchronization information for compensating for a difference in time delay between each of the at least two baseband units and the radio unit for the downlink transmission of data. The at least two baseband units are configured with time scheduling information identifying which transmission slots per frame that are allowed to be used by the at least two baseband units for the downlink transmission of data.

According to independent claim 12 there is presented a network node for enabling time synchronized and coordinated downlink transmission of data from a radio unit. The network node comprises processing circuitry. The processing circuitry is configured to cause the network node to configure at least two baseband units. The at least two baseband units are operatively connected to the radio unit for downlink transmission of data. The at least two baseband units are configured with time synchronization information for compensating for a difference in time delay between each of the at least two baseband units and the radio unit for the downlink transmission of data. The at least two baseband units are configured with time scheduling information identifying which transmission slots per frame that are allowed to be used by the at least two baseband units for the downlink transmission of data.

According to independent claim 14 there is presented a computer program for enabling time synchronized and coordinated downlink transmission of data from a radio unit. The computer program comprises computer program code which, when run on processing circuitry of a network node, causes the network node to perform a method according to claim 1.

According to independent claim 11 there is presented a method for enabling time synchronized and coordinated downlink transmission of data from a radio unit. The method is performed by a baseband unit. The baseband unit is operatively connected to the radio unit for downlink transmission of data. The method comprises obtaining configuration from a network node in terms of time synchronization information for compensating for a difference in time delay between the baseband unit and the radio unit for the downlink transmission of data, and time scheduling information identifying which transmission slots per frame that are allowed to be used by the baseband unit for the downlink transmission of data. The method comprises transmitting downlink data to the radio unit in accordance with the configuration.

According to independent claim 13 there is presented a baseband unit for enabling time synchronized and coordinated downlink transmission of data from a radio unit. The baseband unit is operatively connected to the radio unit for downlink transmission of data. The baseband unit comprises processing circuitry. The processing circuitry is configured to cause the baseband unit to obtain configuration from a network node in terms of time synchronization information for compensating for a difference in time delay between the baseband unit and the radio unit for the downlink transmission of data, and time scheduling information identifying which transmission slots per frame that are allowed to be used by the baseband unit for the downlink transmission of data. The processing circuitry is configured to cause the baseband unit to transmit downlink data to the radio unit in accordance with the configuration.

According to independent claim 15 there is presented a computer program for enabling time synchronized and coordinated downlink transmission of data from a radio unit 120, the computer program comprising computer program code which, when run on processing circuitry of a baseband unit, causes the baseband unit to perform a method according to the fifth aspect.

Advantageously these methods, these network nodes, these baseband units, these computer programs, and this computer program product, provide efficient energy savings in a communication networks at least two baseband units are connected to the same radio unit

Advantageously these methods, these network nodes, these baseband units, these computer programs, and this computer program product can be used to reduce heat generation in the radio unit.

In turn, reduced heat generation in the radio unit leads to relaxed requirements for the thermal design of the radio unit, yielding lower product weight and volume.

Advantageously these methods, these network nodes, these baseband units, these computer programs, and this computer program product yield reduced energy related operational expenses for mobile network operators.

Advantageously these methods, these network nodes, these baseband units, these computer programs, and this computer program product yield a reduced environmental impact of cellular communication networks.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic diagram illustrating a communications system according to an embodiment;
Fig. 2 is a schematic diagram illustrating an access node according to an embodiment;
Figs. 3 and 4 are flowcharts of methods according to embodiments;
Fig. 5 is a schematic illustration of time/frequency resource grids according to embodiments;
Fig. 6 is a schematic diagram showing functional units of a network node according to an embodiment;
Fig. 7 is a schematic diagram showing functional modules of a network node according to an embodiment;
Fig. 8 is a schematic diagram showing functional units of a baseband unit according to an embodiment;
Fig. 9 is a schematic diagram showing functional modules of a baseband unit according to an embodiment; and
Fig. 10 shows one example of a computer program product comprising computer readable means according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

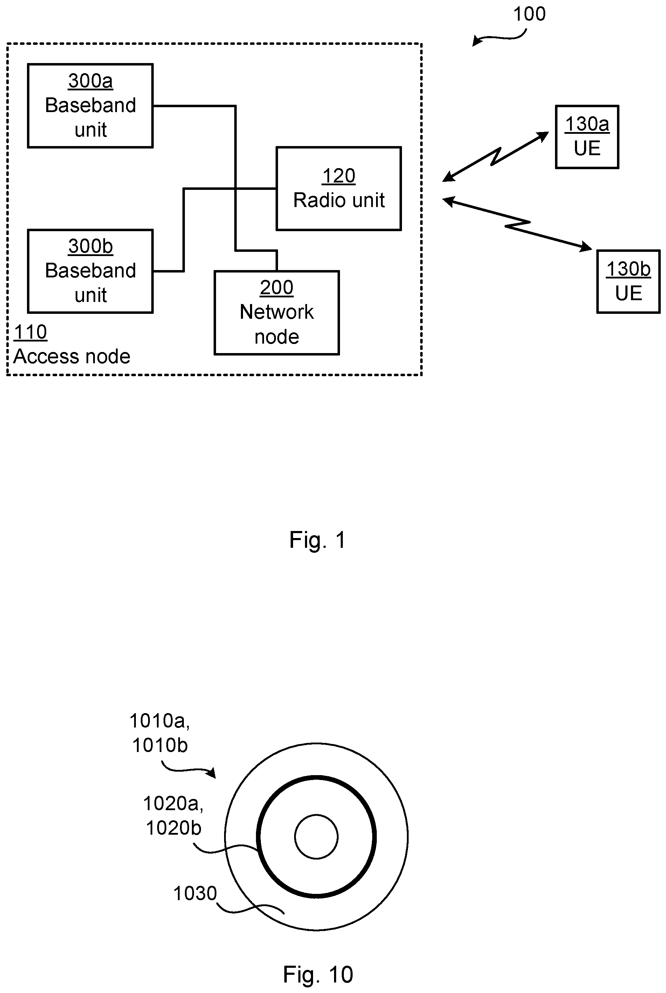

Fig. 1 is a schematic diagram illustrating a communications system 100 where embodiments presented herein can be applied. The communications system 100 comprises a (radio) access node 110 and wireless devices 130a, 130b. The (radio) access node 110 could be any of a radio base station, base transceiver station, node B, evolved node B, gNB, access point, access node, integrated access and backhaul node. Each wireless device 130a, 130b could be any of a portable wireless device, mobile station, mobile phone, handset, wireless local loop phone, user equipment (UE), smartphone, laptop computer, tablet computer, wearable electronic device, wireless modem, wireless sensor device, network equipped vehicle.

In turn, the (radio) access node 110 comprises a radio unit 120 and two baseband units 300a, 300b. In this respect, it is understood that the (radio) access node 110 in general comprises at least two baseband units 300a, 300b and might thus comprise a plurality of baseband units 300a, 300b. The baseband units 300a, 300b are utilized by one or more mobile network operator. Hence, it could be that each of the baseband units 300a, 300b is associated with its own mobile network operator. But in other examples, two or more of the baseband units 300a, 300b are associated with one and the same mobile network operator, possibly operating different radio access technologies with respect to each other. The at least two baseband units 300a, 300b are operatively connected to the radio unit 120 for downlink transmission of data (towards the wireless devices 130a, 130b) and/or for uplink reception of data (from the wireless devices 130a, 130b).

In the example of Fig. 1, the (radio) access node 110 further comprises a network node 200. The network node 200 is thus illustrated as being part of the (radio) access node 110. However, in other examples the network node 200 is provided in, collocated with, or integrated with, the radio unit 120. In yet other examples the network node 200 is provided in, collocated with, or integrated with, a central network node. Further aspects of the network node 200 will be disclosed below.

As disclosed above, there is still a need for efficient energy savings in communication networks where different baseband units 300a, 300b are connected to the same radio unit 120.

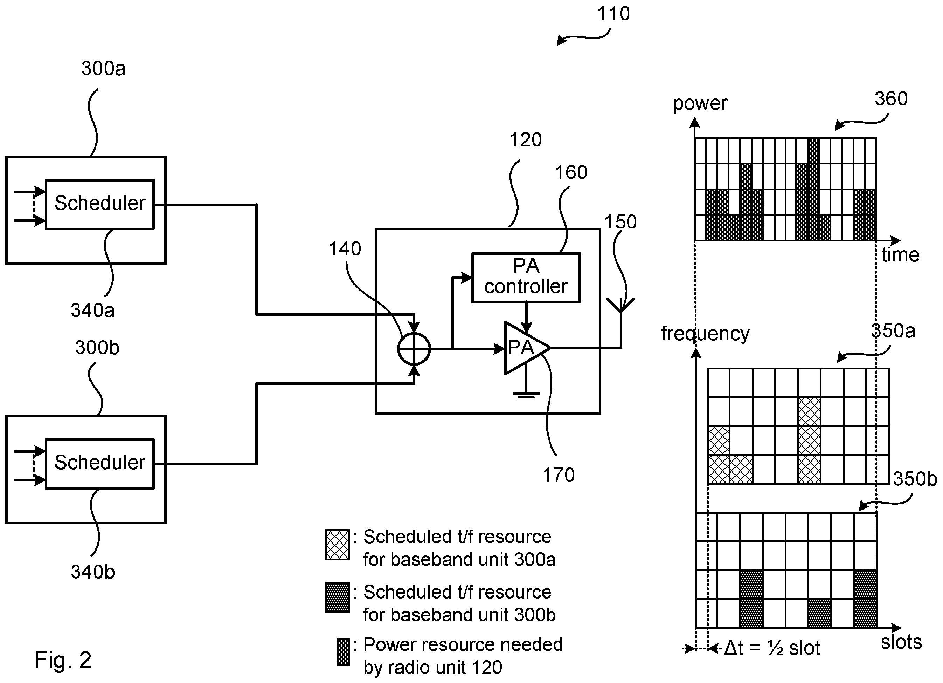

In further detail, when a radio unit 120 is connected to several baseband units 300a, 300b there is no guarantee that the input signals from each baseband unit 300a, 300b to the radio unit 120 will contain simultaneous idle periods. This situation is schematically depicted in Fig. 2. Fig. 2 schematically illustrates the (radio) access node 110 of Fig. 1 in more detail. As illustrated in Fig. 2, each baseband unit 300a, 300b has its own scheduler 340a, 340b, and each baseband unit 300a, 300b generates its own input signal to the radio unit 120 on a respective carrier. The input signals are illustrated at respective grids of time/frequency resources 350a, 350b. According to the illustrative example of Fig. 2, the grids of time/frequency resources 350a, 350b are out of time synchronization with respect to each other by Δt (corresponding to about half a time slot in duration) and occupy different frequency bands. The scheduler is responsible for scheduling of transmission slots and reception sluts for its baseband unit. Thus, in some aspects the network node 200 communicates with the scheduler in each baseband unit 300a, 300b. The input signals are combined at the radio unit 120 in a combiner 140, which for example might be implemented as an adder, and transmitted on an antenna array, as represented by antenna 150 (but where the antenna array might have a plurality of antennas, or antenna elements).

The carriers of the different baseband units 300a, 300b are inactive at different times. This cause the effectiveness of MSTx and LESS if executed individually per each of the baseband units 300a, 300b to be degraded. If there is no symbol synchronization and/or slot synchronization between the carriers, then the time for energy savings with MSTx is decreased even further. This is illustrated at reference numeral 360 which shows, at the same time scale as the grids of time/frequency resources 350a, 350b, the resulting output power at the radio unit 120 as a function of time (where the time scale is divided into units where each unit corresponds to half a slot). Although both baseband units 300a, 300b are silent in 5 out of 8 slots (i.e., are active only 37.5% of the time), the radio unit 120 still needs to be active 62.5% of the time.

Further, in case there is no synchronization of radio frames then it is likely that mandatory transmissions, such as system information and synchronization signal broadcast, will occur at different occasions on the different carriers, even further reducing the effectiveness of energy savings using MSTx, as implemented at the radio unit 120 using a power amplifier controller 160 and a power amplifier 170. Further, it could be difficult, or even impossible, to convey information between the baseband units 300a, 300b themselves. This is especially challenging if the baseband units 300a, 300b belong to different mobile network operators. In conclusion, energy saving mechanisms and techniques such as symbol-based power-save (SBPS) and LESS do not work well in multi-band/multi-RAT/multi-carrier/multi-operator/multi-baseband configurations.

The embodiments disclosed herein therefore relate to mechanisms for enabling time synchronized and coordinated downlink transmission of data from a radio unit 120. In order to obtain such mechanisms there is provided a network node 200, a method performed by the network node 200, a computer program product comprising code, for example in the form of a computer program, that when run on processing circuitry of the network node 200, causes the network node 200 to perform the method. In order to obtain such mechanisms there is further provided a baseband unit 300a, 300b, a method performed by the baseband unit 300a, 300b, and a computer program product comprising code, for example in the form of a computer program, that when run on processing circuitry of the baseband unit 300a, 300b, causes the baseband unit 300a, 300b to perform the method.

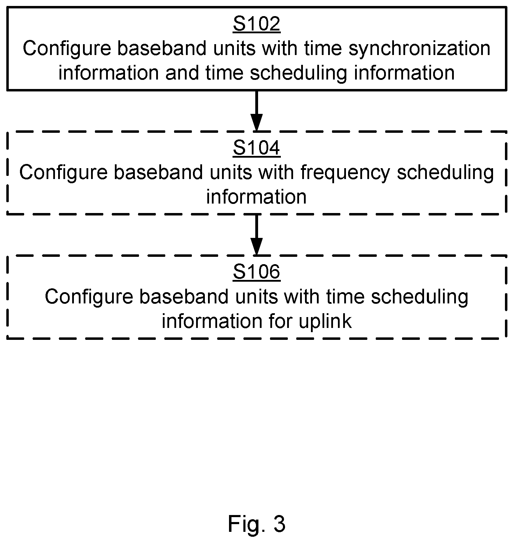

Reference is now made to Fig. 3 illustrating a method for enabling time synchronized and coordinated downlink transmission of data from a radio unit 120 as performed by the network node 200 according to an embodiment.

S102: The network node 200 configures at least two baseband units 300a, 300b. The at least two baseband units 300a, 300b are operatively connected to the radio unit 120 for downlink transmission of data.

The network node 200 configures the at least two baseband units 300a, 300b with time synchronization information for compensating for a difference in time delay between each of the at least two baseband units 300a, 300b and the radio unit 120 for the downlink transmission of data.

The network node 200 configures the at least two baseband units 300a, 300b with time scheduling information identifying which transmission slots per frame that are allowed to be used by the at least two baseband units 300a, 300b for the downlink transmission of data.

In some aspects, the time synchronization information and the time scheduling information are provided to the scheduler in each baseband unit 300a, 300b.

This method coordinates the transmissions from multiple baseband units 300a, 300b connected to the same radio unit 120 in order to ensure efficient energy savings e.g. with LESS and MSTx.

Embodiments relating to further details of enabling time synchronized and coordinated downlink transmission of data from a radio unit 120 as performed by the network node 200 will now be disclosed.

In some aspects, the at least two baseband units 300a, 300b are not in time synchronization with each other. Therefore, in some embodiments, the time synchronization information pertains to a difference in time synchronization between the at least two baseband units 300a, 300b.

There could be one or more levels of time synchronization between the baseband units 300a, 300b. In some embodiments, the time synchronization information pertains to symbol level time synchronization, slot level time synchronization, or frame level time synchronization for compensating for the difference in time delay. That is, when the radio unit 120 receives multiple signals from the baseband units 300a, 300b, one or more levels of time synchronization between these baseband units 300a, 300b is ensured. For example, symbol level synchronization can be created in the radio unit 120 e.g. by delaying one (or more) of the input signals a fraction of a symbol (in steps of smallest common numerology in case of different sub-carrier spacing). For example, slot level synchronization can be created in the radio unit 120 e.g. by delaying one (or more) of the input signals a fraction of a slot (depends on the sub-carrier spacing). For example, system frame number (SFN) level synchronization can be created in the radio unit 120 e.g. by means of ensuring a common start of the radio frame counters in the attached baseband units 300a, 300b.

Further in this respect, the baseband units 300a, 300b are only coarsely time synchronized in the sense that the transmission slot boundaries do not match up perfectly. In case of the new radio (NR) air interface in fifth generation (5G) telecommunication systems it is possible to schedule transmissions that does not start and stop at slot borders. To address this, one of the schedulers (e.g. the scheduler with the smallest sub-carrier spacing) can have a prioritized scheduling window that starts slightly after a slot border (e.g. 1 orthogonal frequency-division multiplexing (OFDM) symbol after the slot border) and/or that ends slightly before a slot border (e.g. 1 OFDM symbol before the slot border).

Time synchronization on SFN level or radio frame level may require that the radio unit (or some other network unit, such as the network node 200) is configured to control the timing of the SFN counter start. This will assure that synchronization signal block (SSB) and system information (SI) transmissions occur approximately simultaneously in the different signal components that the radio unit 120 receives (at least when possible).

Different levels of time synchronization can be created by allowing the radio unit 120, or the network node 200, to provide a time correction term to the baseband units 300a, 300b. The time correction term could be provided in terms of an absolute time reference (e.g. utilizing GPS receiver in the radio unit 120) or a relative time reference (e.g. a message indicating clock start could be sent from the radio unit 120, or the network node 200, to all connected baseband units 300a, 300b). That is, in some embodiments, the network node 200 configures the at least two baseband units 300a, 300b with the time synchronization information either as an absolute time reference or as a relative time reference.

In further aspects, a periodic compensation for timing drift between the attached baseband units 300a, 300b may be required. That is, in some embodiments, the network node 200 periodically configures the at least two baseband units 300a, 300b with the time synchronization information.

In further aspects, one of the baseband unit 300a, 300b acts as master time-keeper and the radio unit 120, or the network node 200, informs the other connected baseband units 300a, 300b to synchronize their timing relative to the master unit. That is, in some embodiments, the network node 200 uses time information from one of the at least two baseband units 300a, 300b as time reference for the time synchronization information.

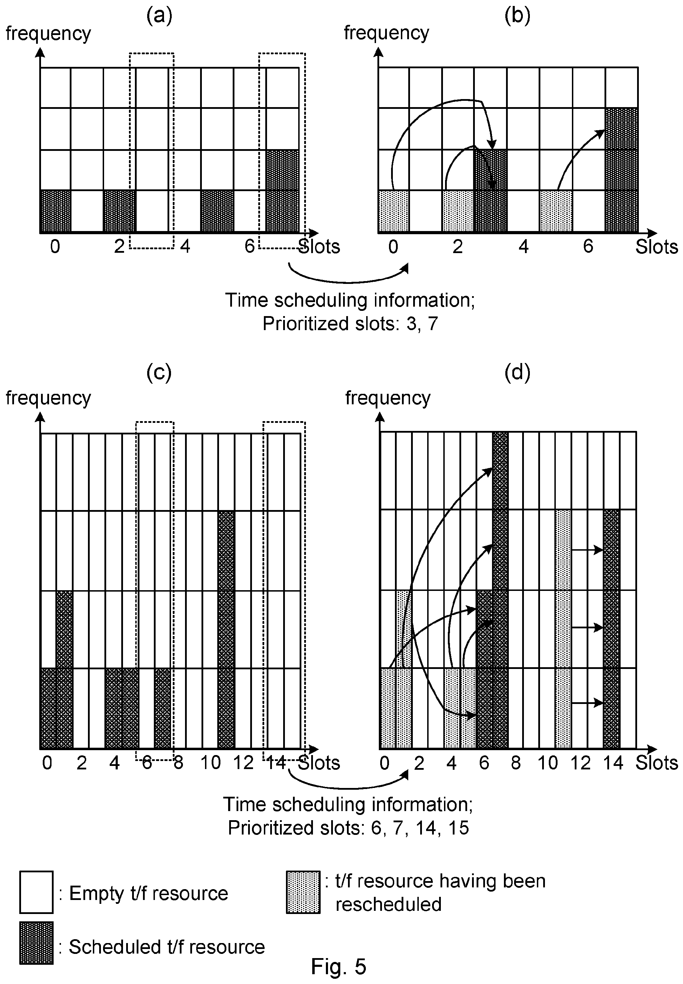

By defining overlapping prioritized transmission slots for the baseband units 300a, 300b the time periods of no transmission for the different baseband units 300a, 300b can be highly correlated. This applies also where numerology differ between the baseband units 300a, 300b. That is, in some embodiments, at least two of the at least two baseband units 300a, 300b use different numerologies with respect to each other for the downlink transmission of data, and the time scheduling information is adapted to each of the numerologies. In this respect, the time scheduling information might be adapted such that prioritized or allowed transmission slots in the different numerologies at least partly overlap. An example illustrating this is presented in below described Fig. 5.

In some aspects, the radio unit 120, or the network node 200, informs the baseband units 300a, 300b of prioritized transmission slots or prioritized low bandwidth slots. In other aspects, prioritized transmission slots are defined as a static or semi-static configuration of each baseband unit 300a, 300b. In some examples there are multiple levels of prioritized slots. That is, in some embodiments, the time synchronization information specifies a prioritization order of the transmission slots per frame that are allowed to be used by the at least two baseband units 300a, 300b for the downlink transmission of data. For example, according to the prioritization order, a baseband unit 300a, 300b shall try to utilize only transmission slots of highest priority level when scheduling downlink transmission of data. When all transmission slots of highest priority level have been filled, the baseband unit 300a, 300b shall try to utilize only transmission slots of second highest priority level when scheduling downlink transmission of data, etc.

The indication of which transmission slots that are to be considered as prioritized might be dynamically adjusted. This dynamic adjustment can be made by the network node 200 possibly as assisted by, or by means of input from, a central network management node (e.g. an Operational Support System (OSS) node, or a Self-Optimizing Network (SON) node, etc.). The adjustment may be based on e.g. the amount of time-sensitive traffic in the network, or in a particular cell. That is, in some embodiments, the data to be transmitted is associated with a level of time-sensitivity, and the network node 200 accesses information of the time-sensitivity for dynamically updating the time scheduling information. In other embodiments, each of the at least two baseband units 300a, 300b is configured with identical transmission slots per frame that are allowed to be used for the downlink transmission of data.

In further aspects, the radio unit 120, or the network node 200, informs the baseband units 300a, 300b of how many prioritized transmission slots the radio unit 120 is capable of handling during a certain time unit, such as a radio frame. The number of prioritized transmission slots may be adjusted dynamically and be based on e.g. current load, temperature of certain components or subsystems, in the radio unit 120. Correspondingly, in some aspects, instead of specifying which transmission slots that are prioritized for transmission, the transmission slots that are prioritized to be empty are specified.

In some aspects the radio unit 120 is configured to dynamically adjust its operational mode by examining input signals from the baseband units 300a, 300b. In particular, in some embodiments, the radio unit 120 comprises a power amplifier (PA) 170 and a PA controller 160, and the network node 200 provides input to the PA controller 160 for dynamically adjusting the PA 170 according to maximum power or data rate required for the downlink transmission of data. In some examples, PA biasing can be dynamically determined by examining the peak power as well as the peak data rate (or modulation order) of each data stream from the baseband units 300a, 300b. In terms of PA biasing, the peak power of all attached signals can be determined, for example by summing together side information provided in each data stream. In terms of peak data rate or modulation biasing, the maximum data rate or modulation order in all attached signals can be determined and the PA back-off can be adjusted accordingly; lower data rate, or modulation order, yields less PA back-off. In addition, digital processing can be adapted to requirement of the total sum-signal after all input component signals are combined. The ratio unit 120 might activate digital processing resources based on a pre-determined function of scheduled bandwidth, number of branches, number of wireless devices 130a, 130b, number of layers, etc. in all attached input signal components.

In some aspects, temporary excess radio capacity (e.g. caused by cool outdoor temperature, or one or more of the baseband unit(s) 300a, 300b not operating in full throughput mode, etc.) can be used by other baseband unit(s) 300a, 300b. In particular, in some embodiments, the network node 200 obtains information of temporary excess radio capacity at the radio unit 120, and the network node 200 dynamically updates the time scheduling information by allocating, in accordance with the information of temporary excess radio capacity, further transmission slots per frame that are allowed to be used by the at least two baseband units 300a, 300b for the downlink transmission of data. This can be realized by feedback from the radio unit 120, or the network node 200, to one or more of the baseband units 300a, 300b regarding availability of excess radio unit capacity. In particular, in some embodiments, the network node 200 obtains information of downlink traffic load at each of the baseband units 300a, 300b, and the network node 200 dynamically updates the time scheduling information by allocating further transmission slots per frame that, according to the information of downlink traffic load, are unused by one of the at least two baseband units 300a, 300b to another of the at least two baseband units 300a, 300b.

In some aspects, prioritization of the scheduled bandwidth of the baseband units 300a, 300b is deployed. The network node 200 might therefore configure the baseband units 300a, 300b with frequency scheduling information. In particular, in some embodiments, the network node 200 is configured to perform (optional) step S104:
S104: The network node 200 configures the at least two baseband units 300a, 300b with frequency scheduling information identifying which frequency bands per frame that are allowed to be used by the at least two baseband units 300a, 300b for the downlink transmission of data.

In some aspects, the frequency scheduling information is provided to the scheduler in each baseband unit 300a, 300b.

This implies that, when possible, the baseband units 300a, 300b shall try to reduce the scheduled bandwidth in certain steps. This can e.g. be utilized in the radio unit 120 to reduce the amount of digital processing resources that need to be activated for the downlink transmission of data.

In general terms, any of the above disclosed embodiments could be applied for uplink reception of data. That is, where data for the baseband units 300a, 300b is received by the radio unit 120 from the wireless devices 130a, 130b in reception slots. This implies that the baseband units 300a, 300b are operatively connected to the radio unit 120 for uplink reception of data. In particular, in some embodiments, the network node 200 is configured to perform (optional) step S106:
S106: The network node 200 configures the at least two baseband units 300a, 300b with time scheduling information identifying possible reception slots per frame for uplink reception of data at the at least two baseband units 300a, 300b.

In some aspects, the time scheduling information is provided to the scheduler in each baseband unit 300a, 300b.

In some examples, each baseband unit 300a, 300b signals information of already scheduled uplink activity to the radio unit 120, or network node 200. The radio unit 120, or network node 200, may then inform other ones of the baseband units 300a, 300b about planned uplink activity so as to co-locate the uplink activities of two or more baseband units 300a, 300b. In turn, this could lead to an increased unused number of reception slots at the radio unit 120.

There could be different ways for the network node 200 to configure the at least two baseband units 300a, 300b with the time synchronization information and the time scheduling information in step S102 (as well as with the frequency scheduling information in step S104 and the time scheduling information in step S106). In some examples the at least two baseband units 300a, 300b are configured by the time synchronization information and the time scheduling information of step S102 (as well as the frequency scheduling information in step S104 and the time scheduling information in step S106) either being provided in a control message sent on an interface between the network node 200 and each of the at least two baseband units 300a, 300b or being piggybacked with uplink data. One example of such an interface is the Common Public Radio Interface (CPRI).

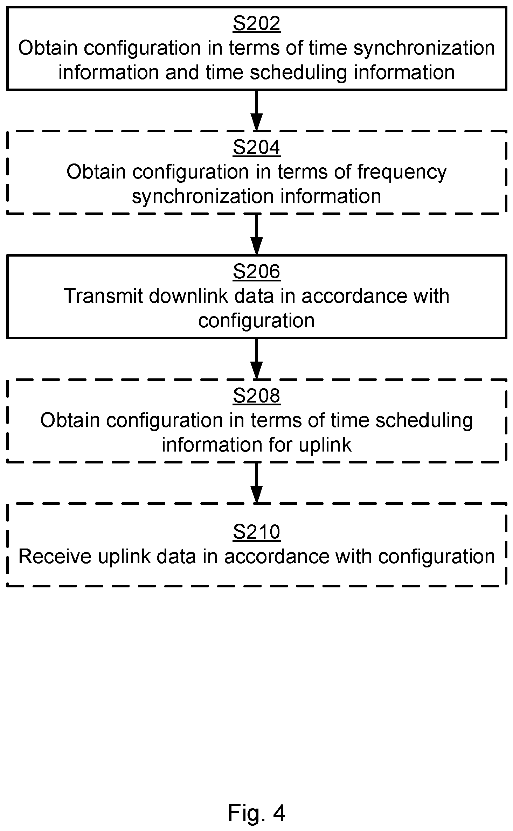

Reference is now made to Fig. 4 illustrating a method for enabling time synchronized and coordinated downlink transmission of data from a radio unit 120 as performed by one of the baseband units 300a, 300b according to an embodiment. The baseband units 300a, 300b are operatively connected to the radio unit 120 for downlink transmission of data.

S202: The baseband unit 300a, 300b obtains configuration in terms of time synchronization information for compensating for a difference in time delay between the baseband unit 300a, 300b and the radio unit 120 for the downlink transmission of data, and time scheduling information identifying which transmission slots per frame that are allowed to be used by the baseband unit 300a, 300b for the downlink transmission of data.

In some aspects, the configuration is obtained by the scheduler in the baseband unit 300a, 300b.

S206: The baseband unit 300a, 300b transmits downlink data to the radio unit 120 in accordance with the configuration.

In some aspects, the transmission of the downlink data is scheduled by the scheduler in the baseband unit 300a, 300b in accordance with the configuration.

Embodiments relating to further details of enabling time synchronized and coordinated downlink transmission of data from a radio unit 120 as performed by the baseband unit 300a, 300b will now be disclosed.

In general terms, the embodiments disclosed above relating to the operation of the network node 200 are also applicable for the operation of each baseband unit 300a, 300b.

As disclosed above, at least two baseband units 300a, 300b are operatively connected to the radio unit 120 for downlink transmission of data and the at least two baseband units 300a, 300b are not in time synchronization with each other. Therefore, in some embodiments, the time synchronization information pertains to a difference in time synchronization between the baseband unit 300a, 300b and another baseband unit 300a, 300b.

As disclosed above, there could be one or more levels of time synchronization between the baseband units 300a, 300b. Thus, in some embodiments, the time synchronization information pertains to symbol level time synchronization, slot level time synchronization, or frame level time synchronization for compensating for the difference in time delay.

As disclosed above, different levels of time synchronization can be created by allowing the radio unit 120, or the network node 200, to provide a time correction term to the baseband units 300a, 300b either in terms of an absolute time reference or in terms of a relative time reference. Thus, in some embodiments, the baseband unit 300a, 300b is configured with the time synchronization information either as an absolute time reference or as a relative time reference.

As disclosed above, a periodic compensation for timing drift between the attached baseband units 300a, 300b may be required. Thus, in some embodiments, the baseband unit 300a, 300b periodically obtains the configuration.

As disclosed above, the network node 200 might use time information from one of the at least two baseband units 300a, 300b as time reference for the time synchronization information. Thus, in some embodiments, time information from the baseband unit 300a, 300b is used as time reference for the time synchronization information.

As disclosed above, the network node 200 might inform the baseband units 300a, 300b of prioritized transmission slots or prioritized low bandwidth slots. Thus, in some embodiments, the time synchronization information specifies a prioritization order of the transmission slots per frame that are allowed to be used by the baseband unit 300a, 300b for the downlink transmission of data.

As disclosed above, the network node 200 might configure the baseband unit 300a, 300b with frequency scheduling information, as in (optional) step S104. Thus, in some embodiments, the baseband unit 300a, 300b is configured to perform (optional) step S204:
S204: The baseband unit 300a, 300b obtains configuration from the network node 200 in terms of frequency scheduling information identifying which frequency bands per frame that are allowed to be used by the baseband unit 300a, 300b for the downlink transmission of data.

In some aspects, the configuration is obtained by the scheduler in the baseband unit 300a, 300b.

The downlink transmission of data from the baseband unit 300a, 300b is then adapted to be in accordance with the frequency scheduling information.

As disclosed above, in some aspects the baseband unit 300a, 300b is operatively connected to the radio unit 120 for uplink reception of data and the network node 200 configures the baseband unit 300a, 300b with time scheduling information identifying possible reception slots per frame for uplink reception of data, as in (optional) step S106. Thus, in some embodiments, the baseband unit 300a, 300b is configured to perform (optional) step S208 and step S210:
S208: The baseband unit 300a, 300b obtains configuration from the network node 200 in terms of time scheduling information identifying possible reception slots per frame for uplink reception of data at the baseband unit 300a, 300b.

In some aspects, the configuration is obtained by the scheduler in the baseband unit 300a, 300b.

S210: The baseband unit 300a, 300b receives uplink data from the radio unit 120 in accordance with the configuration.

In some aspects, the reception of the uplink data is scheduled by the scheduler in the baseband unit 300a, 300b in accordance with the configuration.

As disclosed above, there could be different ways for the network node 200 to configure the baseband unit 300a, 300b with the time synchronization information and the time scheduling information as received in step S202 (as well as with the frequency scheduling information as received in step S204 and the time scheduling information as received in step S208). That is, in some embodiments, the baseband unit 300a, 300b is configured by the time synchronization information and the time scheduling information (as well as the frequency scheduling information as received in step S204 and the time scheduling information as received in step S208) either being obtained in a control message sent on an interface between the network node 200 and the baseband unit 300a, 300b or being piggybacked with uplink data. One example of such an interface is the Common Public Radio Interface (CPRI).

Fig. 5 schematically illustrates, in terms of grids of time/frequency (t/f) resources, an example where the schedulers of two baseband units 300a, 300b use different numerologies with respect to each other. The grid of time/frequency resources for baseband unit 300a is illustrated in Fig. 5(a) and Fig. 5(b) whilst the grid of time/frequency resources for baseband unit 300b is illustrated in Fig. 5(c) and Fig. 5(d). It is assumed that the two baseband units 300a, 300b are connected to a radio unit 120 for downlink transmission of data (and/or uplink reception of data). The slot numbering is thus different for the two baseband units 300a, 300b; the slot numbering for baseband unit 300a runs from 0 to 7 whilst the slot numbering for baseband unit 300b runs from 0 to 15. According to the time scheduling information, baseband unit 300a is to prioritize slots 3 and 7 whilst baseband unit 300a is to prioritize slots 6, 7, 14 and 15. Because of the different numerologies used, slot 3 of baseband unit 300a overlaps with slots 6 and 7 of baseband unit 300b, and slot 7 of baseband unit 300a overlaps with slots 14 and 15 of baseband unit 300b. Hence, as illustrated in Fig. 5, the two baseband units 300a, 300b are configured with overlapping prioritized slots. It is also noted that baseband unit 300a and baseband unit 300b have different sub-carrier spacing with respect to each other; the sub-carrier spacing for baseband unit 300a is denoted Δ*f*₁ whilst the sub-carrier spacing for baseband unit 300b is denoted Δ*f*₂. Arrows show how the scheduled time/frequency resources (before configuration, as in Fig. 5(a) and Fig. 5(c)) are mapped to new scheduled time/frequency resources (after configuration, as in Fig. 5(b) and Fig. 5(d)). Thus, after configuration, the slots with scheduled time/frequency resources of baseband unit 300a and the slots with scheduled time/frequency resources of baseband unit 300b overlap. Hence, despite the fact that the numerologies are different, the herein disclosed embodiments still enable efficient use of LESS and MSTx. The herein disclosed configuration of time synchronization information and time scheduling information thus enables coordinated LESS and MSTx for the two baseband units 300a, 300b.

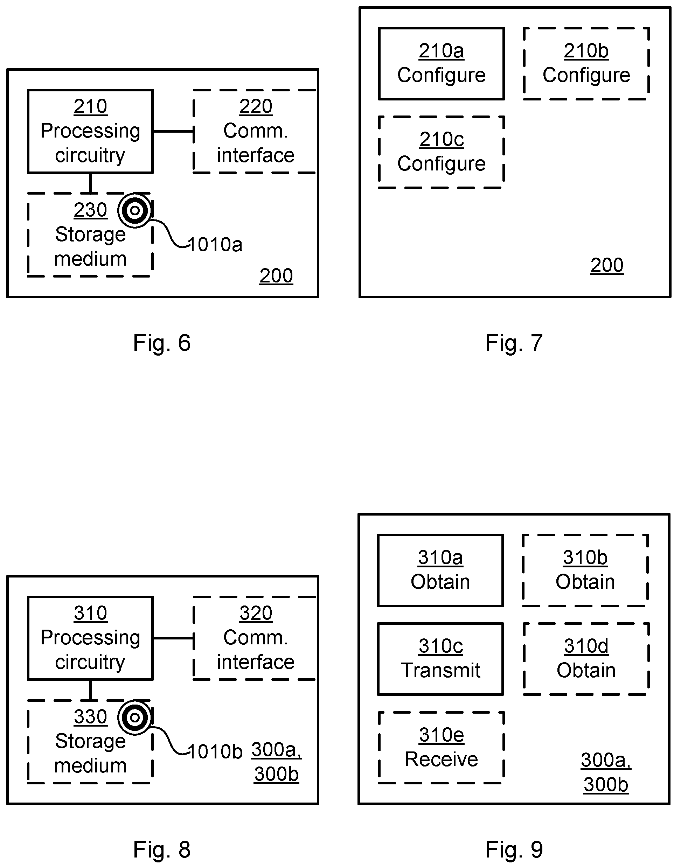

Fig. 6 schematically illustrates, in terms of a number of functional units, the components of a network node 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 1010a (as in Fig. 10), e.g. in the form of a storage medium 230. The processing circuitry 210 may further be provided as at least one application specific integrated circuit (ASIC), or field programmable gate array (FPGA).

Particularly, the processing circuitry 210 is configured to cause the network node 200 to perform a set of operations, or steps, as disclosed above. For example, the storage medium 230 may store the set of operations, and the processing circuitry 210 may be configured to retrieve the set of operations from the storage medium 230 to cause the network node 200 to perform the set of operations. The set of operations may be provided as a set of executable instructions. Thus the processing circuitry 210 is thereby arranged to execute methods as herein disclosed.

The storage medium 230 may also comprise persistent storage, which, for example, can be any single one or combination of magnetic memory, optical memory, solid state memory or even remotely mounted memory.

The network node 200 may further comprise a communications interface 220 for communications at least with the radio unit 120 and the baseband units 300a, 300b. As such the communications interface 220 may comprise one or more transmitters and receivers, comprising analogue and digital components.

The processing circuitry 210 controls the general operation of the network node 200 e.g. by sending data and control signals to the communications interface 220 and the storage medium 230, by receiving data and reports from the communications interface 220, and by retrieving data and instructions from the storage medium 230. Other components, as well as the related functionality, of the network node 200 are omitted in order not to obscure the concepts presented herein.

Fig. 7 schematically illustrates, in terms of a number of functional modules, the components of a network node 200 according to an embodiment. The network node 200 of Fig. 7 comprises a configure module 210a configured to perform step S102. The network node 200 of Fig. 7 may further comprise a number of optional functional modules, such as any of a configure module 210b configured to perform step S10,4 and a configure module 210c configured to perform step S106. In general terms, each functional module 210a:210c may be implemented in hardware or in software. Preferably, one or more or all functional modules 210a:210c may be implemented by the processing circuitry 210, possibly in cooperation with the communications interface 220 and/or the storage medium 230. The processing circuitry 210 may thus be arranged to from the storage medium 230 fetch instructions as provided by a functional module 210a:210c and to execute these instructions, thereby performing any steps of the network node 200 as disclosed herein.

The network node 200 may be provided as a standalone device or as a part of at least one further device. For example, the network node 200 may be provided in a node of the radio access network or in a node of the core network. Alternatively, functionality of the network node 200 may be distributed between at least two devices, or nodes. These at least two nodes, or devices, may either be part of the same network part (such as the radio access network or the core network) or may be spread between at least two such network parts. In general terms, instructions that are required to be performed in real time may be performed in a device, or node, operatively closer to the cell than instructions that are not required to be performed in real time.

Thus, a first portion of the instructions performed by the network node 200 may be executed in a first device, and a second portion of the instructions performed by the network node 200 may be executed in a second device; the herein disclosed embodiments are not limited to any particular number of devices on which the instructions performed by the network node 200 may be executed. Hence, the methods according to the herein disclosed embodiments are suitable to be performed by a network node 200 residing in a cloud computational environment. Therefore, although a single processing circuitry 210 is illustrated in Fig. 6 the processing circuitry 210 may be distributed among a plurality of devices, or nodes. The same applies to the functional modules 210a:210c of Fig. 7 and the computer program 1020a of Fig. 10.

Fig. 8 schematically illustrates, in terms of a number of functional units, the components of a baseband unit 300a, 300b according to an embodiment. Processing circuitry 310 is provided using any combination of one or more of a suitable central processing unit (CPU), multiprocessor, microcontroller, digital signal processor (DSP), etc., capable of executing software instructions stored in a computer program product 1010b (as in Fig. 10), e.g. in the form of a storage medium 330. The processing circuitry 310 may further be provided as at least one application specific integrated circuit (ASIC), or field programmable gate array (FPGA).

Particularly, the processing circuitry 310 is configured to cause the baseband unit 300a, 300b to perform a set of operations, or steps, as disclosed above. For example, the storage medium 330 may store the set of operations, and the processing circuitry 310 may be configured to retrieve the set of operations from the storage medium 330 to cause the baseband unit 300a, 300b to perform the set of operations. The set of operations may be provided as a set of executable instructions. Thus the processing circuitry 310 is thereby arranged to execute methods as herein disclosed.

The storage medium 330 may also comprise persistent storage, which, for example, can be any single one or combination of magnetic memory, optical memory, solid state memory or even remotely mounted memory.

The baseband unit 300a, 300b may further comprise a communications interface 320 for communications at least with the network node 200 and the radio unit 120. As such the communications interface 320 may comprise one or more transmitters and receivers, comprising analogue and digital components.

The processing circuitry 310 controls the general operation of the baseband unit 300a, 300b e.g. by sending data and control signals to the communications interface 320 and the storage medium 330, by receiving data and reports from the communications interface 320, and by retrieving data and instructions from the storage medium 330. Other components, as well as the related functionality, of the baseband unit 300a, 300b are omitted in order not to obscure the concepts presented herein.

Fig. 9 schematically illustrates, in terms of a number of functional modules, the components of a baseband unit 300a, 300b according to an embodiment. The baseband unit 300a, 300b of Fig. 9 comprises a number of functional modules; an obtain module 310a configured to perform step S202, and a transmit module 310c configured to perform step S206. The baseband unit 300a, 300b of Fig. 9 may further comprise a number of optional functional modules, such as any of an obtain module 310b configured to perform step S204, an obtain module 310d configured to perform step S206, and a receive module 310d configured to perform step S210. In general terms, each functional module 310a:310e may be implemented in hardware or in software. Preferably, one or more or all functional modules 310a:310e may be implemented by the processing circuitry 310, possibly in cooperation with the communications interface 320 and/or the storage medium 330. The processing circuitry 310 may thus be arranged to from the storage medium 330 fetch instructions as provided by a functional module 310a:310e and to execute these instructions, thereby performing any steps of the baseband unit 300a, 300b as disclosed herein.

Fig. 10 shows one example of a computer program product 1010a, 1010b comprising computer readable means 1030. On this computer readable means 1030, a computer program 1020a can be stored, which computer program 1020a can cause the processing circuitry 210 and thereto operatively coupled entities and devices, such as the communications interface 220 and the storage medium 230, to execute methods according to embodiments described herein. The computer program 1020a and/or computer program product 1010a may thus provide means for performing any steps of the network node 200 as herein disclosed. On this computer readable means 1030, a computer program 1020b can be stored, which computer program 1020b can cause the processing circuitry 310 and thereto operatively coupled entities and devices, such as the communications interface 320 and the storage medium 330, to execute methods according to embodiments described herein. The computer program 1020b and/or computer program product 1010b may thus provide means for performing any steps of the baseband unit 300a, 300b as herein disclosed.

In the example of Fig. 10, the computer program product 1010a, 1010b is illustrated as an optical disc, such as a CD (compact disc) or a DVD (digital versatile disc) or a Blu-Ray disc. The computer program product 1010a, 1010b could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 1020a, 1020b is here schematically shown as a track on the depicted optical disk, the computer program 1020a, 1020b can be stored in any way which is suitable for the computer program product 1010a, 1010b.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method for enabling arrival of time synchronized and coordinated downlink data from at least two baseband units (300a, 300b) at a radio unit (120), the method being performed by a network node (200), the method comprising:
configuring (S102) the at least two baseband units (300a, 300b), wherein the at least two baseband units (300a, 300b) being operatively connected to the radio unit (120) for downlink transmission of data, with:
- time synchronization information for compensating for a difference in time delay between each of the at least two baseband units (300a, 300b) and the radio unit (120) for the downlink transmission of data, and
- time scheduling information identifying which transmission slots per frame that are allowed to be used by the at least two baseband units (300a, 300b) for the downlink transmission of data.

2. The method according to claim 1, wherein the time synchronization information pertains to symbol level time synchronization, slot level time synchronization, or frame level time synchronization for compensating for the difference in time delay.

3. The method according to any preceding claim, wherein the time synchronization information pertains to a difference in time synchronization between the at least two baseband units (300a, 300b).

4. The method according to any preceding claim, wherein the time synchronization information specifies a prioritization order of the transmission slots per frame that are allowed to be used by the at least two baseband units (300a, 300b) for the downlink transmission of data.

5. The method according to any preceding claim, wherein each of the at least two baseband units (300a, 300b) is configured with identical transmission slots per frame that are allowed to be used for the downlink transmission of data.

6. The method according to any preceding claim, wherein at least two of the at least two baseband units (300a, 300b) use different numerologies with respect to each other for the downlink transmission of data, and wherein the time scheduling information is adapted to each of the numerologies.

7. The method according to any preceding claim, wherein the radio unit (120) comprises a power amplifier (170) and a power amplifier controller (160), and wherein the network node (200) provides input to the power amplifier controller (160) for dynamically adjusting the power amplifier 170 according to maximum power or data rate required for the downlink transmission of data.

8. The method according to any preceding claim, wherein the network node (200) obtains information of temporary excess radio capacity at the radio unit (120), and wherein the network node (200) dynamically updates the time scheduling information by allocating, in accordance with the information of temporary excess radio capacity, further transmission slots per frame that are allowed to be used by the at least two baseband units (300a, 300b) for the downlink transmission of data.

9. The method according to any preceding claim, wherein the network node (200) obtains information of downlink traffic load at each of the baseband units (300a, 300b), and wherein the network node (200) dynamically updates the time scheduling information by allocating further transmission slots per frame that, according to the information of downlink traffic load, are unused by one of the at least two baseband units (300a, 300b) to another of the at least two baseband units (300a, 300b).

10. The method according to any preceding claim, wherein the network node (200) is provided in, collocated with, or integrated with, any of: the radio unit (120), a central network node.

11. A method for enabling downlink transmissions to a connected a radio unit (120) to arrive from a first base band unit (300a, 300b) at the radio unit(120) time synchronized and coordinated with downlink data arriving at the radio unit from at least one other baseband unit (300a, 300b), the method being performed by said first baseband unit (300a, 300b), the first baseband unit (300a, 300b) being operatively connected to the radio unit (120) for downlink transmission of data, the method comprising:
obtaining (S202) configuration from a network node (200) in terms of:
- time synchronization information for compensating for a difference in time delay between the baseband unit (300a, 300b) and the radio unit (120) for the downlink transmission of data, and
- time scheduling information identifying which transmission slots per frame that are allowed to be used by the baseband unit (300a, 300b) for the downlink transmission of data; and
transmitting (S206) downlink data to the radio unit (120) in accordance with the configuration.

12. A network node (200) for enabling arrival of time synchronized and coordinated downlink data from at least two baseband units (300a, 300b) at a radio unit (120), the network node (200) comprising processing circuitry (210), the processing circuitry being configured to cause the network node (200) to:
configure at least two baseband units (300a, 300b), the at least two baseband units (300a, 300b) being operatively connected to the radio unit (120) for downlink transmission of data, with:
- time synchronization information for compensating for a difference in time delay between each of the at least two baseband units (300a, 300b) and the radio unit (120) for the downlink transmission of data, and
- time scheduling information identifying which transmission slots per frame that are allowed to be used by the at least two baseband units (300a, 300b) for the downlink transmission of data.

13. A first baseband unit (300a, 300b) for enabling downlink transmissions to a connected a radio unit (120) to arrive from the first base band unit (300a, 300b) at the radio unit(120) time synchronized and coordinated with a downlink transmission of data arriving at the radio unit (120) from at least one second baseband unit (300a, 300b) the first baseband unit (300a, 300b) being operatively connected to the radio unit (120) for downlink transmission of data and comprising processing circuitry (310), the processing circuitry being configured to cause the first baseband unit (300a, 300b) to:
obtain configuration from a network node (200) in terms of:
- time synchronization information for compensating for a difference in time delay between the baseband unit (300a, 300b) and the radio unit (120) for the downlink transmission of data, and
- time scheduling information identifying which transmission slots per frame that are allowed to be used by the baseband unit (300a, 300b) for the downlink transmission of data; and
transmit downlink data to the radio unit (120) in accordance with the configuration.

14. A computer program (1020a) for enabling arrival of time synchronized and coordinated downlink data from at least two baseband units (300a, 300b) at a radio unit (120), the computer program comprising computer code which, when run on processing circuitry (210) of a network node (200), causes the network node (200) to:
configure (S102) the at least two baseband units (300a, 300b), the at least two baseband units (300a, 300b) being operatively connected to the radio unit (120) for downlink transmission of data, with:
- time synchronization information for compensating for a difference in time delay between each of the at least two baseband units (300a, 300b) and the radio unit (120) for the downlink transmission of data, and
- time scheduling information identifying which transmission slots per frame that are allowed to be used by the at least two baseband units (300a, 300b) for the downlink transmission of data.

15. A computer program (1020b) for enabling downlink transmissions to a connected a radio unit (120) to arrive from a first base band unit (300a, 300b) at the radio unit(120) time synchronized and coordinated with downlink data arriving at the radio unit (120) from at least a second base band unit (300a, 300b) at the radio unit(120), the computer program comprising computer code which, when run on processing circuitry (310) of the first baseband unit (300a, 300b), causes the first baseband unit (300a, 300b) when being operatively connected to the radio unit (120) for downlink transmission of data to:
obtain (S202) configuration from a network node (200) in terms of:
- time synchronization information for compensating for a difference in time delay between the baseband unit (300a, 300b) and the radio unit (120) for the downlink transmission of data, and
- time scheduling information identifying which transmission slots per frame that are allowed to be used by the baseband unit (300a, 300b) for the downlink transmission of data; and
transmit (S206) downlink data to the radio unit (120) in accordance with the configuration.

## Patentansprüche

1. Verfahren zum Ermöglichen der Ankunft von zeitsynchronisierten und koordinierten Abwärtsstrecken-Daten von mindestens zwei Basisbandeinheiten (300a, 300b) an einer Funkeinheit (120), wobei das Verfahren von einem Netzwerkknoten (200) durchgeführt wird, wobei das Verfahren umfasst:
Konfigurieren (S102) der mindestens zwei Basisbandeinheiten (300a, 300b), wobei die mindestens zwei Basisbandeinheiten (300a, 300b) zur Abwärtsstrecken-Übertragung von Daten mit der Funkeinheit (120) wirkverbunden sind, mit:
- Zeitsynchronisationsinformationen zum Kompensieren einer Zeitverzögerungsdifferenz zwischen jeder der mindestens zwei Basisbandeinheiten (300a, 300b) und der Funkeinheit (120) für die Abwärtsstrecken-Übertragung von Daten, und
- Zeitplanungsinformationen, die identifizieren, welchen Übertragungsschlitzen pro Rahmen von den mindestens zwei Basisbandeinheiten (300a, 300b) es erlaubt ist, für die Abwärtsstrecken-Übertragung von Daten verwendet zu werden.

2. Verfahren nach Anspruch 1, wobei sich die Zeitsynchronisationsinformationen auf Zeitsynchronisation auf Symbolebene, Zeitsynchronisation auf Schlitzebene oder Zeitsynchronisation auf Rahmenebene zum Kompensieren der Zeitverzögerungsdifferenz beziehen.

3. Verfahren nach einem vorstehenden Anspruch, wobei sich die Zeitsynchronisationsinformationen auf eine Zeitsynchronisationsdifferenz zwischen den mindestens zwei Basisbandeinheiten (300a, 300b) beziehen.

4. Verfahren nach einem vorstehenden Anspruch, wobei die Zeitsynchronisationsinformationen eine Priorisierungsreihenfolge der Übertragungsschlitze pro Rahmen spezifizieren, denen erlaubt ist, von den mindestens zwei Basisbandeinheiten (300a, 300b) für die Abwärtsstrecken-Übertragung von Daten verwendet zu werden.

5. Verfahren nach einem vorstehenden Anspruch, wobei jede der mindestens zwei Basisbandeinheiten (300a, 300b) mit identischen Übertragungsschlitzen pro Rahmen konfiguriert ist, denen es erlaubt ist, für die Abwärtsstrecken-Übertragung von Daten verwendet zu werden.

6. Verfahren nach einem vorstehenden Anspruch, wobei mindestens zwei der mindestens zwei Basisbandeinheiten (300a, 300b) für die Abwärtsstrecken-Übertragung von Daten voneinander verschiedene Zahlensymboliken verwenden, und wobei die Zeitplanungsinformationen jeder der Zahlensymboliken angepasst sind.

7. Verfahren nach einem vorstehenden Anspruch, wobei die Funkeinheit (120) einen Leistungsverstärker (170) und eine Leistungsverstärker-Steuereinheit (160) umfasst, und wobei der Netzwerkknoten (200) der Leistungsverstärker-Steuereinheit (160) einen Eingang zum dynamischen Anpassen des Leistungsverstärkers 170 gemäß der maximalen Leistung oder Datenrate, die für die Abwärtsstrecken-Übertragung von Daten erforderlich ist, bereitstellt.

8. Verfahren nach einem vorstehenden Anspruch, wobei der Netzwerkknoten (200) Informationen über vorübergehend überschüssige Funkkapazität an der Funkeinheit (120) erhält, und wobei der Netzwerkknoten (200) die Zeitplanungsinformationen dynamisch durch Zuweisen, in Übereinstimmung mit den Informationen über vorübergehend überschüssige Funkkapazität, weiterer Übertragungsschlitze pro Rahmen, denen es erlaubt ist, von den mindestens zwei Basisbandeinheiten (300a, 300b) für die Abwärtsstrecken-Übertragung von Daten verwendet zu werden, aktualisiert.

9. Verfahren nach einem vorstehenden Anspruch, wobei der Netzwerkknoten (200) Informationen von Abwärtsstrecken-Verkehrslast an jeder der Basisbandeinheiten (300a, 300b) erhält, und wobei der Netzwerkknoten (200) die Zeitplanungsinformationen dynamisch durch Zuweisen weiterer Übertragungsschlitze pro Rahmen, die gemäß den Informationen von Abwärtsstrecken-Verkehrslast von einer der mindestens zwei Basisbandeinheiten (300a, 300b) nicht genutzt werden, zu einer anderen der mindestens zwei Basisbandeinheiten (300a, 300b) aktualisiert.

10. Verfahren nach einem vorstehenden Anspruch, wobei der Netzwerkknoten (200) bereitgestellt ist in, gemeinsam untergebracht ist mit oder integriert ist in einem von: der Funkeinheit (120), einem zentralen Netzwerkknoten.

11. Verfahren zum Ermöglichen, dass Abwärtsstrecken-Übertragungen an eine verbundene Funkeinheit (120) von einer ersten Basisbandeinheit (300a, 300b) an der Funkeinheit(120) ankommen, die mit Abwärtsstrecken-Daten, die von mindestens einer anderen Basisbandeinheit (300a, 300b) an der Funkeinheit ankommen, zeitsynchronisiert und koordiniert ist, wobei das Verfahren von der ersten Basisbandeinheit (300a, 300b) durchgeführt wird, wobei die erste Basisbandeinheit (300a, 300b) zur Abwärtsstrecken-Übertragung von Daten mit der Funkeinheit (120) wirkverbunden ist, wobei das Verfahren umfasst:
Erhalten (S202) einer Konfiguration von einem Netzwerkknoten (200) hinsichtlich:
- Zeitsynchronisationsinformationen zum Kompensieren einer Zeitverzögerungsdifferenz zwischen der Basisbandeinheit (300a, 300b) und der Funkeinheit (120) für die Abwärtsstrecken-Übertragung von Daten, und
- Zeitplanungsinformationen, die identifizieren, welchen Übertragungsschlitzen pro Rahmen von der Basisbandeinheit (300a, 300b) es erlaubt ist, für die Abwärtsstrecken-Übertragung von Daten verwendet zu werden; und
Übertragen (S206) von Abwärtsstrecken-Daten an die Funkeinheit (120) in Übereinstimmung mit der Konfiguration.

12. Netzwerkknoten (200) zum Ermöglichen der Ankunft von zeitsynchronisierten und koordinierten Abwärtsstrecken-Daten von mindestens zwei Basisbandeinheiten (300a, 300b) an einer Funkeinheit (120), wobei der Netzwerkknoten (200) eine Verarbeitungsschaltung (210) umfasst, wobei die Verarbeitungsschaltung konfiguriert sind, um den Netzwerkknoten (200) zu veranlassen:
mindestens zwei Basisbandeinheiten (300a, 300b) zu konfigurieren, wobei die mindestens zwei Basisbandeinheiten (300a, 300b) zur Abwärtsstrecken-Übertragung von Daten mit der Funkeinheit (120) wirkverbunden sind, mit:
- Zeitsynchronisationsinformationen zum Kompensieren einer Zeitverzögerungsdifferenz zwischen jeder der mindestens zwei Basisbandeinheiten (300a, 300b) und der Funkeinheit (120) für die Abwärtsstrecken-Übertragung von Daten, und
- Zeitplanungsinformationen, die identifizieren, welchen Übertragungsschlitzen pro Rahmen von den mindestens zwei Basisbandeinheiten (300a, 300b) es erlaubt ist, für die Abwärtsstrecken-Übertragung von Daten verwendet zu werden.

13. Erste Basisbandeinheit (300a, 300b) zum Ermöglichen, dass Abwärtsstrecken-Übertragungen an eine verbundene Funkeinheit (120) von der ersten Basisbandeinheit (300a, 300b) an der Funkeinheit (120) ankommen, die mit einer Abwärtsstrecken-Übertragung von Daten, die von mindestens einer zweiten Basisbandeinheit (300a, 300b) an der Funkeinheit (120) ankommen, zeitsynchronisiert und koordiniert ist, wobei die erste Basisbandeinheit (300a, 300b) zur Abwärtsstrecken-Übertragung von Daten mit der Funkeinheit (120) wirkverbunden ist und eine Verarbeitungsschaltung (310) umfasst, wobei die Verarbeitungsschaltung konfiguriert ist, um die erste Basisbandeinheit (300a, 300b) zu veranlassen:
eine Konfiguration von einem Netzwerkknoten (200) zu erhalten, hinsichtlich:
- Zeitsynchronisationsinformationen zum Kompensieren einer Zeitverzögerungsdifferenz zwischen der Basisbandeinheit (300a, 300b) und der Funkeinheit (120) für die Abwärtsstrecken-Übertragung von Daten, und
- Zeitplanungsinformationen, die identifizieren, welchen Übertragungsschlitzen pro Rahmen von der Basisbandeinheit (300a, 300b) es erlaubt ist, für die Abwärtsstrecken-Übertragung von Daten verwendet zu werden; und
Abwärtsstrecken-Daten in Übereinstimmung mit der Konfiguration an die Funkeinheit (120) zu übertragen.

14. Computerprogramm (1020a) zum Ermöglichen der Ankunft von zeitsynchronisierten und koordinierten Abwärtsstrecken-Daten von mindestens zwei Basisbandeinheiten (300a, 300b) an einer Funkeinheit (120), wobei das Computerprogramm einen Computercode umfasst, der, wenn er auf einer Verarbeitungsschaltung (210) eines Netzwerkknotens (200) läuft, den Netzwerkknoten (200) veranlasst:
die mindestens zwei Basisbandeinheiten (300a, 300b) zu konfigurieren (S102), wobei die mindestens zwei Basisbandeinheiten (300a, 300b) zur Abwärtsstrecken-Übertragung von Daten mit der Funkeinheit (120) wirkverbunden sind, mit:
- Zeitsynchronisationsinformationen zum Kompensieren einer Zeitverzögerungsdifferenz zwischen jeder der mindestens zwei Basisbandeinheiten (300a, 300b) und der Funkeinheit (120) für die Abwärtsstrecken-Übertragung von Daten, und
- Zeitplanungsinformationen, die identifizieren, welchen Übertragungsschlitzen pro Rahmen von den mindestens zwei Basisbandeinheiten (300a, 300b) es erlaubt ist, für die Abwärtsstrecken-Übertragung von Daten verwendet zu werden.

15. Computerprogramm (1020b) zum Ermöglichen, dass Abwärtsstrecken-Übertragungen an eine verbundene Funkeinheit (120) von einer ersten Basisbandeinheit (300a, 300b) an der Funkeinheit (120) ankommen, die mit Abwärtsstrecken-Daten, die von mindestens einer zweiten Basisbandeinheit (300a, 300b) an der Funkeinheit (120) ankommen, zeitsynchronisiert und koordiniert ist, wobei das Computerprogramm einen Computercode umfasst, der, wenn er auf einer Verarbeitungsschaltung (310) der ersten Basisbandeinheit (300a, 300b) läuft, die erste Basisbandeinheit (300a, 300b), wenn sie zur Abwärtsstrecken-Übertragung von Daten mit der Funkeinheit (120) wirkverbunden ist, veranlasst:
eine Konfiguration von einem Netzwerkknoten (200) zu erhalten (S202), hinsichtlich:
- Zeitsynchronisationsinformationen zum Kompensieren einer Zeitverzögerungsdifferenz zwischen der Basisbandeinheit (300a, 300b) und der Funkeinheit (120) für die Abwärtsstrecken-Übertragung von Daten, und
- Zeitplanungsinformationen, die identifizieren, welchen Übertragungsschlitzen pro Rahmen von der Basisbandeinheit (300a, 300b) es erlaubt ist, für die Abwärtsstrecken-Übertragung von Daten verwendet zu werden; und
Abwärtsstrecken-Daten in Übereinstimmung mit der Konfiguration an die Funkeinheit (120) zu übertragen (S206).

## Revendications

1. Procédé permettant l'arrivée de données de liaison descendante synchronisées et coordonnées dans le temps provenant d'au moins deux unités de bande de base (300a, 300b) au niveau d'une unité radio (120), le procédé étant mis en œuvre par un nœud de réseau (200), le procédé comprenant :
la configuration (S102) des au moins deux unités de bande de base (300a, 300b), dans lequel les au moins deux unités de bande de base (300a, 300b) sont connectées fonctionnellement à l'unité radio (120) pour la transmission de données en liaison descendante, avec :
- des informations de synchronisation temporelle pour compenser une différence de retard temporel entre chacune des au moins deux unités de bande de base (300a, 300b) et l'unité radio (120) pour la transmission de données en liaison descendante, et
- des informations de planification temporelle identifiant les créneaux de transmission par trame qui peuvent être utilisés par les au moins deux unités de bande de base (300a, 300b) pour la transmission de données en liaison descendante.

2. Procédé selon la revendication 1, dans lequel les informations de synchronisation temporelle concernent la synchronisation temporelle au niveau symbole, la synchronisation temporelle au niveau créneau ou la synchronisation temporelle au niveau trame pour compenser la différence de retard temporel.

3. Procédé selon une quelconque revendication précédente, dans lequel les informations de synchronisation temporelle concernent une différence de synchronisation temporelle entre les au moins deux unités de bande de base (300a, 300b).

4. Procédé selon une quelconque revendication précédente, dans lequel les informations de synchronisation temporelle spécifient un ordre de priorité des créneaux de transmission par trame qui peuvent être utilisés par les au moins deux unités de bande de base (300a, 300b) pour la transmission de données en liaison descendante.

5. Procédé selon une quelconque revendication précédente, dans lequel chacune des au moins deux unités de bande de base (300a, 300b) est configurée avec des créneaux de transmission identiques par trame qui peuvent être utilisés pour la transmission de données en liaison descendante.

6. Procédé selon une quelconque revendication précédente, dans lequel au moins deux des au moins deux unités de bande de base (300a, 300b) utilisent des numérologies différentes l'une par rapport à l'autre pour la transmission de données en liaison descendante, et dans lequel les informations de planification temporelle sont adaptées à chacune des numérologies.

7. Procédé selon une quelconque revendication précédente, dans lequel l'unité radio (120) comprend un amplificateur de puissance (170) et un dispositif de commande (160) d'amplificateur de puissance, et dans lequel le nœud de réseau (200) fournit une entrée au dispositif de commande (160) d'amplificateur de puissance pour ajuster dynamiquement l'amplificateur de puissance (170) en fonction de la puissance maximale ou du débit de données requis pour la transmission de données en liaison descendante.

8. Procédé selon une quelconque revendication précédente, dans lequel le nœud de réseau (200) obtient des informations de capacité radio excédentaire temporaire au niveau de l'unité radio (120), et dans lequel le nœud de réseau (200) met à jour dynamiquement les informations de planification temporelle en allouant, conformément aux informations de capacité radio excédentaire temporaire, d'autres créneaux de transmission par trame qui peuvent être utilisés par les au moins deux unités de bande de base (300a, 300b) pour la transmission de données en liaison descendante.

9. Procédé selon une quelconque revendication précédente, dans lequel le nœud de réseau (200) obtient des informations de charge de trafic de liaison descendante au niveau de chacune des unités de bande de base (300a, 300b), et dans lequel le nœud de réseau (200) met à jour dynamiquement les informations de planification temporelle en allouant d'autres créneaux de transmission par trame qui, selon les informations de charge de trafic de liaison descendante, ne sont pas utilisés par l'une des au moins deux unités de bande de base (300a, 300b) à une autre des au moins deux unités de bande de base (300a, 300b).

10. Procédé selon une quelconque revendication précédente, dans lequel le nœud de réseau (200) est fourni dans, colocalisé avec, ou intégré à, l'un quelconque des éléments suivants : l'unité radio (120), un nœud de réseau central.

11. Procédé permettant à des transmissions en liaison descendante vers une unité radio (120) connectée d'arriver d'une première unité de bande de base (300a, 300b) au niveau de l'unité radio (120), synchronisées et coordonnées dans le temps, des données de liaison descendante arrivant au niveau de l'unité radio en provenance d'au moins une autre unité de bande de base (300a, 300b), le procédé étant mis en œuvre par ladite première unité de bande de base (300a, 300b), la première unité de bande de base (300a, 300b) étant connectée fonctionnellement à l'unité radio (120) pour la transmission de données en liaison descendante, le procédé comprenant :
l'obtention (S202) d'une configuration à partir d'un nœud de réseau (200) en ce qui concerne :
- des informations de synchronisation temporelle pour compenser une différence de retard temporel entre l'unité de bande de base (300a, 300b) et l'unité radio (120) pour la transmission de données en liaison descendante, et
- des informations de planification temporelle identifiant les créneaux de transmission par trame qui peuvent être utilisés par l'unité de bande de base (300a, 300b) pour la transmission de données en liaison descendante ; et
la transmission (S206) des données de liaison descendante à l'unité radio (120) conformément à la configuration.

12. Nœud de réseau (200) permettant l'arrivée de données de liaison descendante synchronisées et coordonnées dans le temps provenant d'au moins deux unités de bande de base (300a, 300b) au niveau d'une unité radio (120), le nœud de réseau (200) comprenant un ensemble de circuits de traitement (210), l'ensemble de circuits de traitement étant configuré pour amener le nœud de réseau (200) à :
configurer au moins deux unités de bande de base (300a, 300b), les au moins deux unités de bande de base (300a, 300b) étant connectées fonctionnellement à l'unité radio (120) pour la transmission de données en liaison descendante, avec :
- des informations de synchronisation temporelle pour compenser une différence de retard temporel entre chacune des au moins deux unités de bande de base (300a, 300b) et l'unité radio (120) pour la transmission de données en liaison descendante, et
- des informations de planification temporelle identifiant les créneaux de transmission par trame qui peuvent être utilisés par les au moins deux unités de bande de base (300a, 300b) pour la transmission de données en liaison descendante.

13. Première unité de bande de base (300a, 300b) permettant à des transmissions en liaison descendante vers une unité radio (120) connectée d'arriver de la première unité de bande de base (300a, 300b) au niveau de l'unité radio (120), synchronisées et coordonnées dans le temps, une transmission de données en liaison descendante arrivant au niveau de l'unité radio (120) en provenance d'au moins une seconde unité de bande de base (300a, 300b), la première unité de bande de base (300a, 300b) étant connectée fonctionnellement à l'unité radio (120) pour la transmission de données en liaison descendante et comprenant un ensemble de circuits de traitement (310), l'ensemble de circuits de traitement étant configuré pour amener la première unité de bande de base (300a, 300b) à :
obtenir une configuration à partir d'un nœud de réseau (200) en ce qui concerne :
- des informations de synchronisation temporelle pour compenser une différence de retard temporel entre l'unité de bande de base (300a, 300b) et l'unité radio (120) pour la transmission de données en liaison descendante, et
- des informations de planification temporelle identifiant les créneaux de transmission par trame qui peuvent être utilisés par l'unité de bande de base (300a, 300b) pour la transmission de données en liaison descendante ; et
transmettre des données de liaison descendante à l'unité radio (120) conformément à la configuration.

14. Programme informatique (1020a) permettant l'arrivée de données de liaison descendante synchronisées et coordonnées dans le temps provenant d'au moins deux unités de bande de base (300a, 300b) au niveau d'une unité radio (120), le programme informatique comprenant un code informatique qui, lorsqu'il est exécuté sur un ensemble de circuits de traitement (210) d'un nœud de réseau (200), amène le nœud de réseau (200) à :
configurer (S102) les au moins deux unités de bande de base (300a, 300b), les au moins deux unités de bande de base (300a, 300b) étant connectées fonctionnellement à l'unité radio (120) pour la transmission de données en liaison descendante, avec :
- des informations de synchronisation temporelle pour compenser une différence de retard temporel entre chacune des au moins deux unités de bande de base (300a, 300b) et l'unité radio (120) pour la transmission de données en liaison descendante, et
- des informations de planification temporelle identifiant les créneaux de transmission par trame qui peuvent être utilisés par les au moins deux unités de bande de base (300a, 300b) pour la transmission de données en liaison descendante.

15. Programme informatique (1020b) permettant à des transmissions en liaison descendante vers une unité radio (120) connectée d'arriver d'une première unité de bande de base (300a, 300b) au niveau de l'unité radio (120), synchronisées et coordonnées dans le temps, les données de liaison descendante arrivant au niveau de l'unité radio (120) en provenance d'au moins une seconde unité de bande de base (300a, 300b) au niveau de l'unité radio (120), le programme informatique comprenant un code informatique qui, lorsqu'il est exécuté sur un ensemble de circuits de traitement (310) de la première unité de bande de base (300a, 300b), amène la première unité de bande de base (300a, 300b), lorsqu'elle est connectée fonctionnellement à l'unité radio (120) pour une transmission de données en liaison descendante, à :
obtenir (S202) une configuration à partir d'un nœud de réseau (200) en ce qui concerne :
- des informations de synchronisation temporelle pour compenser une différence de retard temporel entre l'unité de bande de base (300a, 300b) et l'unité radio (120) pour la transmission de données en liaison descendante, et
- des informations de planification temporelle identifiant les créneaux de transmission par trame qui peuvent être utilisés par l'unité de bande de base (300a, 300b) pour la transmission de données en liaison descendante ; et
transmettre (S206) des données de liaison descendante à l'unité radio (120) conformément à la configuration.
